# EUROPÄISCHE PATENTSCHRIFT

(11) **EP 1 702 941 B1**
(45) Veröffentlichungstag und Bekanntmachung des Hinweises auf die Patenterteilung: **16.07.2008**
(21) Anmeldenummer: 06004517.6
(22) Anmeldetag: 06.03.2006
(51) Int. Cl.: C08G 65/26

(54) **Poly(etherester)polyole und Verfahren zu ihrer Herstellung**
Poly(etherester)polyols and process for preparing them
Poly(etherester)polyols et leur procede de production

(30) Priorität: 19.03.2005 DE 102005012794
(43) Veröffentlichungstag der Anmeldung: 20.09.2006
(73) Patentinhaber: Bayer MaterialScience AG, 51368 Leverkusen (DE)
(72) Erfinder: Lorenz, Klaus, Dr., 41539 Dormagen (DE); Hofmann, Jörg, Dr., 47829 Krefeld (DE); Nefzger, Hartmut, Dr., 50259 Pulheim (DE)

(56) Entgegenhaltungen:
- EP-A- 0 428 737
- WO-A-01/27185
- WO-A-95/00574
- WO-A-03/076488
- DE-A1- 3 437 915

## Beschreibung

Gegenstand der Erfindung sind Poly(etherester)polyole, Verfahren zu ihrer Herstellung aus Mono-oder Polycarbonsäureestern mit einer oder mehreren angebundenen Polyetherkette(n) und deren Verwendung als Komponenten zur Herstellung von Polyurethanwerkstoffen.

Poly(etherester)polyole mit Blockstruktur finden bei der Herstellung von Polyurethanwerkstoffen beispielsweise Einsatz als Phasenvermittler in Polyolformulierungen, welche Polyesterpolyole und Polyetherpolyole enthalten. Poly(etherester)polyole mit gleichmäßig über die Polymerketten verteilten Estergruppen sind in PUR-Anwendungen erwünscht, die eine Kombination aus vorteilhaften Polyethereigenschaften, wie beispielsweise Hydrolysebeständigkeit und niedrige Viskosität einerseits und vorteilhaften Polyestereigenschaften, wie beispielsweise hohe Abriebsfestigkeit, hohe Weiterreißfestigkeit, hohe Bruchdehnung und Reißfestigkeit und gute Lösungsmittelbeständigkeit andererseits, erfordern.

Poly(ether-block-ester) mit definierter AB-Zweiblock- oder ABA-Dreiblockstruktur können nicht durch basen- oder säurekatalysierte Anlagerung von Alkylenoxiden an OH-funktionelle Polyester erhalten werden, da diese Polyester in Gegenwart solcher Katalysatoren Umesterungs- und Spaltungsreaktionen unterliegen. Bei der Herstellung von Poly(etherester)polyolen ist man daher auf vorgefertigte Poly(ether)polyole angewiesen, die in einem zweiten Schritt mit Polyestern oder Polycarbonsäuren, Polycarbonsäureestern, Polycarbonsäurehalogeniden oder Polycarbonsäureanhydriden und niedermolekularen Polyolen zu einem (AB)ₙ-Multiblockcopolymer, umgeestert oder verestert werden. Die Wahl der Stöchiometrie der Reaktanden Polyetherpolyol, Polycarbonsäure(derivat) und niedermolekulares Polyol beim Veresterungs- oder Umesterungsschritt bestimmt die mittlere Länge der zwischen den Polyetherblöcken eingebauten Polyesterblöcke. Die Blockstruktur, die Länge der Polyesterblöcke und die Funktionalität der Produkte unterliegen jedoch immer der bei der Herstellung von Polykondensaten aus mehrfunktionellen Ausgangskomponenten herrschenden Statistik. Der Einsatz der Doppelmetallcyanidkomplexkatalyse (DMC-Katalyse) erlaubt die Verwendung von Polyesterpolyolen als Starterkomponenten für die Herstellung von Poly(ester-block-ether)polyolen mit AB-Zweiblock- oder ABA-Dreiblockstruktur und ist somit eine Verbesserung der bisherigen Verfahrensweise.

WO 01/27185 beschreibt die Herstellung von Poly(ester-block-ether)polyolen ausgehend von Polyestern unter DMC-katalysierter Anlagerung von Alkylenoxiden, gemäß WO 03/076488 werden höherfunktionelle Poly(ester-block-ether)polyole ausgehend von höherfunktionellen Polyestern unter DMC-katalysierter Anlagerung von Alkylenoxiden erhalten. Auf Basis der in diesen beiden Patenten beschriebenen Verfahrensweise werden ABA-Dreiblockstrukturen erhalten, es ist jedoch nicht möglich, Poly(etherester)polyole mit homogen und gleichmäßig über die Polymerketten verteilten Esterbindungen herzustellen.

Nach der Lehre der DE 17 70 548 A werden Poly(etherester) durch DMC-katalysierte Umsetzung von Carbonsäureanhydriden mit Alkylenoxiden erhalten. Die Poly(etherester) können sowohl Carbonsäure- als auch Hydroxyendgruppen enthalten. In ähnlicher Weise beschreibt US 5,145,883 A die Herstellung von Poly(etherester)n durch Reaktion von Carbonsäureanhydriden und Alkylenoxiden in Gegenwart von Polyetherpolyolen als Starterverbindungen. Ein Nachteil der beschriebenen Verfahren liegt in der Neigung zum alternierenden Einbau der Comonomere, wodurch beim Einsatz von Alkylenoxidüberschüssen Poly(etherester) mit Blockstrukturen und nicht mit homogen und gleichmäßig über die Polymerketten verteilten Esterbindungen erhalten werden.

Gemäß WO 95/00574 werden Poly(ester-block-ether)-Elastomere erhalten durch Umsetzung von difunktionellen Polyetherpolyolen mit einem geringen Gehalt an olefinischen Doppelbindungen (< 0,03 meq/g Polyether) mit Polyestern aus niedermolekularen Diolen und Dicarbonsäuren unter Katalyse mit Umesterungskatalysatoren. Auch mit diesem Verfahren werden Poly(etherester)polyole mit (AB)ₙ-Multiblockstrukturen und nicht mit homogen und gleichmäßig über die Polymerketten verteilten Esterbindungen erhalten.

Gemäß US 5,032,671 werden Alkylenoxide und Lactone unter DMC-Katalyse gegebenenfalls unter Verwendung OH-funktioneller Starter zu Poly(etherester)n bzw. Poly(etherester)polyolen umgesetzt. Die Polymerketten besitzen Blockstruktur oder eine statistische Verteilung von Ether-und Esterbindungen. Eine Kontrolle über den Comonomereinbau ist nach dem beschriebenen Verfahren nicht möglich.

WO 01/04179 und EP 1 112 243 A lehren die Herstellung von Estern mit einer oder mehreren angebundenen Polyetherkette(n) durch Umsetzung hydroxygruppenhaltiger Ester von Carbonsäuren unter DMC-Katalyse. Die weitere Umsetzung dieser Materialien zu Poly(etherester)n mit homogen und gleichmäßig über die Polymerketten verteilten Esterbindungen wird nicht offenbart.

Die Herstellung von Poly(etherester)n mit homogen und gleichmäßig über die Polymerketten verteilten Esterbindungen sowie hochdefinierten Funktionalitäten unter Einsatz der DMC-Katalyse ist bislang nicht beschrieben. Die Poly(etherester)herstellung erfolgt zudem stets über mehrstufige Verfahren.

Aufgabe der Erfindung war die Bereitstellung eines Verfahrens zur Herstellung von Poly(ether-estern), welches durch eine einfache Reaktionssequenz, die ohne aufwändige Aufarbeitungsschritte von den Edukten zum Produkt führt, gekennzeichnet ist und Strukturen mit homogen und gleichmäßig über die Polymerketten verteilten Esterbindungen sowie hochdefinierten Funktionalitäten zugänglich macht.

Es wurde nun gefunden, dass sich durch Umsetzung hydroxygruppenhaltiger Mono- oder Polycarbonsäureester mit Alkylenoxiden Mono- oder Polycarbonsäureester mit einer oder mehreren angebundenen Polyetherkette(n) erhalten lassen. In einer bevorzugten Ausführungsvariante können bei dieser Alkylenoxidadditionsreaktion weitere Di- oder Polyole zugesetzt werden. Die Umsetzung mit den Alkylenoxiden wird unter Verwendung von Doppelmetallcyanidkomplexkatalysatoren durchgeführt, da hierbei die Estergruppen keinen störenden Nebenreaktionen unterliegen. Durch nachfolgende Umesterung gegebenenfalls unter Zusatz eines Umesterungskatalysators werden die gewünschten Poly(etherester)strukturen erhalten. Überraschenderweise kann die zweite Stufe der Poly(etherester)polyol-synthese (die Umesterungsreaktion) auch ohne weitere Aufarbeitung direkt anschließend an die Alkylenoxidaddition durchgeführt werden, was einen signifikanten Vorteil in der Prozessführung darstellt.

Werden höherfunktionelle Polyole (f > 2) allein oder als Mischung mit difunktionellen Polyolen bei der Alkylenoxidadditionsreaktion oder vor der Umesterungsreaktion zugesetzt, so werden Produkte mit definierter Funktionalität erhalten. Solche Poly(etherester)strukturen sind über die Polykondensationsverfahren des Standes der Technik nicht erhältlich, da diese zu einem Gemisch von Produkten unterschiedlicher Funktionalität führen und die maximal erreichbare Funktionalität zudem verfahrensbedingt begrenzt ist auf Grund von Vernetzungsreaktionen.

Durch Alkylenoxidaddition an mehrere Hydroxygruppen enthaltende Carbonsäureester und anschliessende Umesterungsreaktion können verzweigte, ebenfalls nicht vernetzende hochfunktionelle Poly(etherester)strukturen erhalten werden.

Ebenso ist es möglich, durch Alkylenoxidaddition an eine Hydroxygruppe enthaltende Mono- oder Polycarbonsäureester und anschliessende Umesterungsreaktion lineare oder verzweigte, nicht vernetzende hochfunktionelle Poly(etherester)strukturen mit Esterendgruppen zu erhalten.

Gegenstand der Erfindung ist somit ein Verfahren zur Herstellung von Poly(etherestern), bei dem
a) ein oder mehrere Hydroxygruppen enthaltende Mono- oder Polycarbonsäureester der allgemeinen Formel 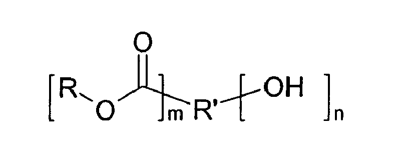 mit
   R = einwertiges Aryl-, Alkyl-, Aralkyl-, Alkenyl- oder Alkinylradikal,
   R' = mindestens zweiwertiges Aryl-, Alkyl-, Aralkyl-, Alkenyl- oder Alkinylradikal,
   wobei
   m = 1 und n = 1, oder
   m ≥ 2 und n = 1, oder
   n ≥ 2 und m = 1 ist,
   mit Alkylenoxiden unter Ringöffnung in Gegenwart von DMC-Katalysatoren zu den entsprechenden Mono- oder Polycarbonsäureestem mit ein oder mehreren angebundenen Polyetherketten umgesetzt werden, wobei die Alkylenoxidaddition gegebenenfalls in Gegenwart eines Di- oder Polyols durchgeführt wird;
b) anschließend die in Schritt a) hergestellten Produkte zu OH-funktionellen Poly(etherester)n umgeestert werden.

Als Ausgangskomponenten für die Herstellung der Mono- oder Polycarbonsäureester mit angebundenen Polyetherketten gemäß Schritt a) eignen sich aromatische hydroxygruppenhaltige Mono-oder Polycarbonsäureester, beispielsweise die Methyl-, Ethyl-, n-Propyl-, iso-Propyl, n-Butyl, isoButyl, tert-Butylester der verschiedenen Isomere der Hydroxybenzoesäure, die Ester der verschiedenen Isomere der Hydroxymethylbenzoesäure, die Ester der verschiedenen Isomere der Dihydroxybenzoesäure, die Ester der Trihydroxybenzoesäure, die Ester der Hydroxyphenylessigsäure, die Ester der Hydroxyphtalsäure und die Ester der Hydroxynaphthoesäure. Geeignete aliphatische hydroxygruppenhaltige Mono- oder Polycarbonsäureester sind beispielsweise die Ester der Glykolsäure, der Mandelsäure, der Milchsäure, der 2-Hydroxybuttersäure, der 3-Hydroxybuttersäure, der 3-Hydroxypropionsäure, der Tropasäure, der Ricinolsäure, der Glycerinsäure, der Hydroxymalonsäure, der Äpfelsäure und der Zitronensäure. Lactone können ebenfalls Verwendung finden, diese müssen jedoch zuvor durch Umsetzung mit einem Alkohol in den entsprechenden offenkettigen hydroxygruppenhaltigen Carbonsäureester überführt werden. Die jeweiligen eine und mehrere Hydroxygruppen enthaltenden Monocarbonsäureester bzw. die jeweiligen eine Hydroxygruppe enthaltenden Polycarbonsäureester können auch im Gemisch eingesetzt werden.

Gegebenenfalls in Schritt a) zugesetzte Di- oder Polyole weisen bevorzugt Funktionalitäten von 2 bis 8 auf. Beispiele sind Propylenglykol, Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch Alkylenoxidadditionsprodukte der erwähnten Di- oder Polyole (Polyetherpolyole) mit OH-Zahlen von 6 - 800 mg KOH/g zugesetzt werden.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid einzeln oder als Gemische verwendet. Die Umsetzung in Schritt a) wird unter Verwendung von DMC-Katalysatoren durchgeführt.

Die für das erfindungsgemäße Verfahren besonders geeigneten DMC-Katalysatoren sind im Prinzip bekannt. Kommerzielles Interesse haben DMC-Katalysatoren vor allem für die Herstellung von Polyetherpolyolen durch Polyaddition von Alkylenoxiden an aktive Wasserstoffatome aufweisende Starterverbindungen gefunden (siehe z.B. US-A 3 404 109, US-A 3 829 505, US-A 3 941 849 und US-A 5 158 922), da der Einsatz der DMC-Katalysatoren eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren bewirkt. Verbesserte, hochaktive DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen zudem eine außerordentlich hohe Aktivität und ermöglichen die Polyetherpolyolherstellung bei sehr geringen Katalysatorkonzentrationen (25 ppm oder weniger), so dass eine Abtrennung des Katalysators aus dem fertigen Produkt nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die Addition von Alkylenoxiden an die ein oder mehrere Hydroxygruppen aufweisende Mono-oder Polycarbonsäureester enthaltenden Ausgangsgemische kann bis zur Erreichung einer beliebig niedrigen OH-Zahl fortgeführt werden. Bevorzugt ist der OH-Zahl-Bereich von 5 - 420. Die verschiedenen Alkylenoxide können außer als Mischung auch blockweise zudosiert werden. In diesen Fällen erhält man Mono- oder Polycarbonsäureester, deren angebundene Polyetherkette(n) Blockstrukturen aufweisen. Bevorzugt werden als Endblock reines Ethylenoxid oder Mischungen aus Propylenoxid und Ethylenoxid mit hohem Ethylenoxidanteil zudosiert, so dass die an die Mono-oder Polycarbonsäureester angebundenen Polyetherketten 40 bis 100 % primäre OH-Endgruppen aufweisen.

Die als Starterkomponenten erfindungsgemäß eingesetzten hydroxygruppenhaltigen (Poly)carbonsäureester und die gegebenenfalls zugesetzten Di- oder Polyole können im Reaktor vorgelegt werden oder dem Reaktor während der Reaktion gemeinsam mit dem Alkylenoxid kontinuierlich zugeführt werden. Bei letzterer Verfahrensweise wird im Reaktor üblicherweise eine kleine Menge eines Additionsproduktes aus Starter und Alkylenoxid vorgelegt, dies kann auch das herzustellende Produkt sein. Es ist ebenso möglich, Reaktionsprodukt kontinuierlich dem Reaktor zu entnehmen, hierbei muss neben Alkylenoxid und Starter auch Katalysator kontinuierlich zudosiert werden. Die verschiedenen Verfahrensvarianten bei der Herstellung von Polyethern nach den Alkylenoxidadditionsverfahren unter DMC-Katalyse sind beschrieben in den oben angeführten Dokumenten sowie in WO 97/29146 und WO 98/03571.

Die DMC-katalysierte Polyaddition von Alkylenoxiden erfolgt im Allgemeinen bei Temperaturen von 20 bis 200°C, bevorzugt von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten organischen Lösungsmittel wie Toluol und/oder THF durchgeführt werden. Die Menge an Lösungsmittel beträgt üblicherweise 10 bis 30 Gew.-%, bezogen auf die Menge des herzustellenden Alkylenoxidadditionsproduktes.

Die Katalysatorkonzentration wird so gewählt, dass unter den gegebenen Reaktionsbedingungen eine gute Beherrschung der Polyadditionsreaktion möglich ist. Die Katalysatorkonzentration beträgt im Allgemeinen 0,0005 Gew.-% bis 1 Gew.-%, bevorzugt 0,001 Gew.-% bis 0,1 Gew.-%, besonders bevorzugt 0,001 bis 0,03 Gew.-%, bezogen auf die Menge des herzustellenden Alkylenoxidadditionsproduktes. Den als Starterkomponenten erfindungsgemäß eingesetzten hydroxygruppenhaltigen (Poly)carbonsäureestern und den gegebenenfalls zugesetzten Di- oder Polyolen können geringe Mengen (1 - 500 ppm, bezogen auf die Startermenge) organischer oder anorganischer Säuren, wie in WO 99/14258 beschrieben, zugesetzt werden.

Den nach Schritt a) erhaltenen Alkylenoxidadditionsprodukten können ggf. Alterungsschutzmittel wie z. B. Antioxidantien zugesetzt werden.

In einer Ausführungsform des erfindungsgemäßen Verfahrens werden die in Schritt a) erhaltenen Produkte unter Umesterungsbedingungen zu OH-funktionalisierten Poly(etherester)n umgesetzt (Schritt b).

Zur Herstellung der OH-funktionalisierten Poly(etherester) können die oben erwähnten Einsatzstoffe katalysatorfrei oder in Gegenwart von Umesterungskatalysatoren, zweckmäßigerweise in einer Atmosphäre aus Inertgasen, wie z.B. Stickstoff, Helium oder Argon und auch in der Schmelze bei Temperaturen von 150 bis 300°C, vorzugsweise 180 bis 230°C bis zum Erreichen der gewünschten OH-Zahl polykondensiert werden.

In einer bevorzugten Variante wird die Umesterung bei einem Druck von weniger als 500 mbar, vorzugsweise 1 bis 150 mbar, durchgeführt. Der Druck kann während der Reaktion dem Reaktionsfortschritt angepasst werden, um die Entfernung leichtflüchtiger Ausgangskomponenten im Anfangsstadium der Polykondensation zu unterbinden.

Zur Beschleunigung der Umesterungsreaktion können alle bekannten Umesterungskatalysatoren wie Mineralsäuren, Lewissäuren und Basen eingesetzt werden. Eisen-, Cadmium-, Kobalt-, Blei-, Zink-, Antimon-, Magnesium-, Titan- und Zinnkatalysatoren in Form von Metallen, Metalloxiden oder Metallsalzen, z.B. Metallalkoxiden, kommen ebenfalls in Betracht. Hingewiesen sei in diesem Zusammenhang auch auf kürzlich bekannt gewordene, verbesserte, weniger hydrolyseempfindliche Übergangsmetallkatalysatoren wie sie beispielsweise in DE-A 100 59 612 beschrieben sind.

Den erhaltenen OH-funktionalisierten Poly(etherester)n können ggf. Alterungsschutzmittel wie z. B. Antioxidantien zugesetzt werden.

Die nach den Schritten a) und b) erhältlichen Poly(etherester) mit Hydroxyendgruppen können als Ausgangskomponenten für die Herstellung von massiven oder geschäumten Polyurethanwerkstoffen sowie von Polyurethanelastomeren eingesetzt werden.

Hierzu werden die Poly(etherester) mit Hydroxyendgruppen gegebenenfalls mit weiteren isocyanatreaktiven Komponenten gemischt und mit organischen Polyisocyanaten, gegebenenfalls in Gegenwart von Treibmitteln, sowie in Gegenwart von Katalysatoren und gegebenenfalls in Gegenwart anderer Zusatzstoffe wie Zellstabilisatoren, zur Reaktion gebracht.

Die Polyurethanwerkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden.

### Beispiele

### Ausgangsmaterialien:

- Polyol B:: Trifunktioneller Polyether der OH-Zahl 238, erhalten durch Anlagerung von Propylenoxid an Glycerin
- DMC-Katalysator:: Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in EP-A 700 949

### Beispiel 1

### Herstellung eines Monocarbonsäureesters mit einer angebundenen Polypropylenoxidkette

333,1 g p-Hydroxybenzoesäureethylester wurden mit 0,105 g DMC-Katalysator in einem 2 1 Druckautoklaven versetzt. Der Luftsauerstoff wurde durch mehrfaches Evakuieren und Begasen mit Stickstoff entfernt. Der Reaktordruck zu Beginn der Propylenoxiddosierung betrug 0,1 bar, als Rührerdrehzahl wurden 800 U/min vorgegeben, die Reaktionstemperatur betrug 130°C. Insgesamt wurden 682 g Propylenoxid zudosiert. Zunächst wurden über einen Zeitraum von 2 h 132 g Propylenoxid in 3 gleichen Portionen zudosiert. Nach Dosierung von weiteren 20 g Propylenoxid sprang die Reaktion an, was sich durch einen plötzlichen Druckabfall im Reaktor bemerkbar machte. Das restliche Propylenoxid konnte innerhalb von 2 h zudosiert werden. Nach Ende der Propylenoxiddosierung ließ man nachreagieren, bis der Druck im Reaktor einen konstanten Wert von 0,8 bar annahm. Das Produkt wurde danach ½ h bei 90°C und 20 mbar ausgeheizt und ohne weitere Aufarbeitung weiter umgesetzt.
OH-Zahl: 105,5 mg KOH/g
Viskosität bei 25°C: 225 mPas

### Beispiel 2

### Propoxylierung eines Gemisches aus einem trifunktionellen Polyol und 4-Hydroxybenzoesäureethylester und Umesterung zum trifunktionellen Polyetherester

840,4 g Polyol B und 592,4 g 4-Hydroxybenzoesäureethylester wurden in einem 10 l Druckautoklaven mit 0,3 g DMC-Katalysator versetzt. Der Reaktorinhalt wurde 53 min. bei 80°C unter Rühren (800 U / min.) im Vakuum ausgeheizt. Zu Beginn der Propylenoxiddosierung betrug der Reaktordruck 0,2 bar, als Rührerdrehzahl für die Reaktion wurden 800 U/min. beibehalten, die Reaktionstemperatur betrug 130°C. Insgesamt wurden 567,23 g Propylenoxid mit einer konstanten Dosiergeschwindigkeit über einen Zeitraum von 2,67 h zudosiert. Nachdem 189 g Propylenoxid dosiert worden waren, machte sich das Anspringen der Reaktion durch einen plötzlichen Druckabfall im Reaktor bemerkbar (erreichtes Druckmaximum: 1,35 bar). Nach Ende der Propylenoxiddosierung ließ man bei 130°C nachreagieren, bis ein konstanter Druck von 0,4 bar erreicht war. Nach Abkühlen auf 90°C wurde der Reaktorinhalt 1/2 h bei 20 mbar ausgeheizt. Der Autoklav wurde sodann durch Beaufschlagen mit Stickstoff auf Normaldruck gebracht und der Inhalt auf 50°C abgekühlt. Es wurde eine Probe des Propoxylates zur Bestimmung von OH-Zahl und Viskosität entnommen.
OH-Zahl: 196,15 mg KOH / g
Viskosität bei 25°C: 301 mPas

Man gab 197,7 mg Titansäuretetrabutylester zu und erwärmte zunächst unter Normaldruck, dann unter Vakuum (1 mbar) auf 200°C. Nachdem 160 g Ethanol abdestilliert worden waren, wurde die Reaktion beendet.
OH-Zahl: 106,7 mg KOH / g
Viskosität bei 25°C: 20900 mPas

### Beispiel 3

### Propoxylierung / Ethoxylierung eines Gemisches aus einem trifunktionellen Polyol und 4-Hydroxybenzoesäureethylester und Umesterung zum trifunktionellen Polyetherester

568,2 g Polyol B, 400,5 g 4-Hydroxybenzoesäureethylester und 275 mg 85 %ige Phosphorsäure wurden in einem 10 1 Druckautoklaven mit 313 mg DMC-Katalysator versetzt. Der Reaktorinhalt wurde 5 h bei 80°C im Vakuum unter Rühren (800 U / min.) ausgeheizt. Durch Zugabe von Stickstoff wurde der Druck auf 1,5 bar erhört und bei 140°C wurde 206,55g Propylenoxid unter Rühren (800 U/min.) innerhalb von 1,43 h zugegeben. Nach Dosierung von 130 g Propylenoxid machte sich das Anspringen der Reaktion durch einen plötzlichen Druckabfall im Reaktor bemerkbar (erreichtes Druckmaximum: 3,2 bar). Direkt im Anschluss an die Propylenoxiddosierung wurden bei 140°C über einen Zeitraum von 2,13 h 826,4 g Ethylenoxid unter Rühren (800 U/min.) zugegeben. Man ließ bei 140°C nachreagieren, bis ein konstanter Enddruck von 1,9 bar erreicht wurde. Nach Abkühlen auf 90°C wurde der Reaktorinhalt 1/2 h bei 20 mbar ausgeheizt. Der Autoklav wurde sodann durch Beaufschlagen mit Stickstoff auf Normaldruck gebracht und der Inhalt auf 50°C abgekühlt. Es wurde eine Probe des Alkylenoxidadditionsproduktes zur Bestimmung von OH-Zahl und Viskosität entnommen.
OH-Zahl: 134,4
Viskosität bei 25°C: 491 mPas
Gehalt an primären OH-Gruppen: 77 %

Man gab 183,1 mg Titansäuretetrabutylester zu und erwärmte zunächst unter Normaldruck, dann unter Vakuum (1 mbar) auf 200°C. Nachdem 107,7 g Ethanol abdestilliert worden waren, wurde die Reaktion beendet.
OH-Zahl: 73,0 mg KOH / g
Viskosität bei 50°C: 679 mPas
Gehalt an primären OH-Gruppen: 74 %

## Patentansprüche

1. Verfahren zur Herstellung von Poly(etherester)n, bei dem
a) ein oder mehrere Hydroxygruppen enthaltende Mono- oder Polycarbonsäureester der allgemeinen Formel 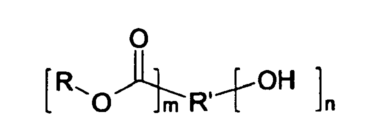 mit
R = einwertiges Aryl-, Alkyl-, Aralkyl-, Alkenyl- oder Alkinylradikal,
R' = mindestens zweiwertiges Aryl-, Alkyl-, Aralkyl-, Alkenyl- oder Alkinylradikal,
wobei
m = 1 und n = 1, oder
m ≥ 2 und n = 1, oder
n ≥ 2 und m = 1 ist,
mit Alkylenoxiden unter Ringöffnung in Gegenwart von DMC-Katalysatoren zu den entsprechenden Mono- oder Polycarbonsäureestern mit einer oder mehreren angebundenen Polyetherkette(n) umgesetzt werden, wobei die Alkylenoxidaddition gegebenenfalls in Gegenwart eines Di- oder Polyols durchgeführt wird;
b) anschließend die in Schritt a) hergestellten Produkte zu OH-funktionellen Poly(etherester)n umgeestert werden.

2. Poly(etherester), erhältlich nach einem Verfahren gemäß Anspruche 1.

3. Verwendung der Poly(etherester) gemäß Anspruch 2 als Komponenten zur Herstellung von Polyurethanwerkstoffen.

## Claims

1. Process for producing poly(ether esters), wherein
a) monocarboxylic or polycarboxylic acid esters containing one or more hydroxyl groups and having the general formula 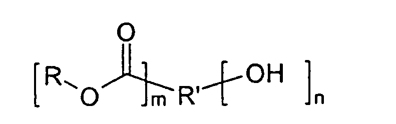 where
R = monovalent aryl, alkyl, aralkyl, alkenyl or alkynyl radical,
R' = at least divalent aryl, alkyl, aralkyl, alkenyl or alkynyl radical,
wherein
m = 1 and n = 1, or
m ≥ 2 and n = 1, or
n ≥ 2 and m = 1,
are reacted with alkylene oxides with ring opening in the presence of DMC catalysts to give the corresponding monocarboxylic or polycarboxylic acid esters with one or more bound polyether chains,
wherein the alkylene oxide addition is optionally performed in the presence of a diol or polyol;
b) then the products produced in step a) are transesterified to give OH-functional poly(ether esters).

2. Poly(ether esters) obtainable by a process according to claim 1.

3. Use of the poly(ether esters) according to claim 2 as components for the production of polyurethane materials.

## Revendications

1. Procédé de préparation de poly(étheresters), dans lequel
a) un ou plusieurs esters d'acide mono- ou polycarboxylique de la formule générale : 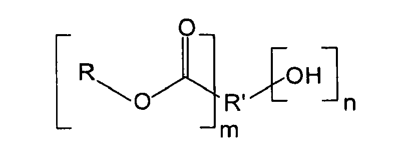 avec
R = un radical monovalent aryle, alkyle, aralkyle, alcényle ou alcynyle,
R' = un radical au moins bivalent aryle, alkyle, aralkyle, alcényle ou alcynyle,
où
m = 1 et n = 1, ou
m ≥ 2 et n = 1, ou
n ≥ 2 et m = 1,
sont mis à réagir avec des oxydes d'alkylène avec ouverture de cycle en présence de catalyseurs DMC pour former les esters d'acide mono- ou polycarboxylique correspondants ayant une ou plusieurs chaînes polyéther liées, où l'addition de l'oxyde d'alkylène est réalisée le cas échéant, en présence d'un di- ou polyol ;
b) ensuite, les produits préparés à l'étape a) sont transestérifiés en poly(étheresters) à fonction OH.

2. Poly(étheresters), obtenus selon le procédé de la revendication 1.

3. Utilisation des poly(étheresters) selon la revendication 2, comme composant pour la préparation de matériaux polyuréthanne.
